# EUROPÄISCHE PATENTSCHRIFT

(11) **EP 0 850 257 B1**
(45) Veröffentlichungstag und Bekanntmachung des Hinweises auf die Patenterteilung: **25.10.2000**
(21) Anmeldenummer: 96929268.9
(22) Anmeldetag: 17.08.1996
(51) Int. Cl.: C08G 18/42, C08G 18/08, C08G 18/80, C09D 175/06

(54) **WÄSSRIGE BINDEMITTELDISPERSION ZUR HERSTELLUNG VON VERGILBUNGSARMEN HOCHGLÄNZENDEN BESCHICHTUNGEN**
AQUEOUS BINDER DISPERSION USEFUL FOR PRODUCING HARDLY YELLOWING, HIGHLY GLOSSY COATINGS
DISPERSION AQUEUSE DE LIANT UTLISEE POUR LA PRODUCTION DE REVETEMENTS A BRILLANCE ELEVEE ET A JAUNISSEMENT A PEINE MARQUE

(30) Priorität: 15.09.1995 DE 19534361
(43) Veröffentlichungstag der Anmeldung: 01.07.1998
(73) Patentinhaber: BASF Coatings Aktiengesellschaft, 48165 Münster (DE)
(72) Erfinder: WILKE, Guido, D-48153 Münster (DE); GRAPATIN, Dittmar, D-48249 Dülmen (DE); RINK, Heinz-Peter, D-48153 Münster (DE)
(74) Vertreter: Fitzner, Uwe, Dr.
(86) Internationale Anmeldenummer: EP9603626
(87) Internationale Veröffentlichungsnummer: WO9710276

(56) Entgegenhaltungen:
- EP-A- 0 017 199
- EP-A- 0 379 007
- DE-A- 2 256 803
- DE-A- 4 226 243
- US-A- 4 071 514
- US-A- 4 116 902

## Beschreibung

### Gebiet der Erfindung

Die Erfindung betrifft ein Einkomponenten-Lacksystem enthaltend wäßrige Bindemitteldispersionen zur Herstellung von vergilbungsarmen hochglänzenden Beschichtungen, enthaltend Polyurethan-Alkydharzkomponenten mit einem spezifischen Gehalt und einer spezifischen Kombination von mehrfach ungesättigten Fettsäure-substituenten als Polymerseitenketten, sowie deren Verwendung als Beschichtungsmittel, insbesondere für Holz und Kunststoff.

### Stand der Technik

Wäßrige Polyurethandispersionen als Bindemittel bei der Herstellung von Beschichtungen auf metallischen, mineralischen, Holz- oder Kunststoff-Substraten sind seit längerem bekannt.
So sind beispielsweise Polyurethanharzdispersionen mit einer Segmentstruktur des Polymerrückgrats beschrieben, die zu einer Zwei- oder Mehrphasigkeit und damit verbunden zu ausgezeichneten elastischen Eigenschaften der Harze führt (Vergl. z.B.: Dr.H.-P.Klein und
Dr.M.Schwab, Kunstharz-Nachrichten 29, Seiten 38 bis 42, 1993). Dabei stellen beispielsweise langkettige Polyether-, Polyester- oder Polycarbonat-Polyol-Einheiten die Weichsegmente und Urethaneinheiten, gebildet aus Diisocyanat, Glykol und Dihydroxycarbonsäure, die Hartsegmente dar.
Darüber hinaus sind oxidativ trocknende Polyurethan-Alkydharz-Hybride bekannt, die ungesättigte Fettsäuren als Substituenten tragen und die insbesondere im Bereich des Korrosionsschutzes eingesetzt werden.
In DE-A 3901190 werden Alkydharze auf Basis von Polyesterpolyolen beschrieben, die mit einer 2,2-Bis(hydroxymethyl)alkancarbonsäure und einer Diisocyanatkomponente in einer Eintopfreaktion derart umgesetzt werden, daß ein Harz mit einem gewichtsmittleren Molekulargewicht Mw von 10000 bis 70000 Dalton, einer Säurezahl von 18 bis 36 mg KOH/g resultiert, welches noch freie Hydroxygruppen jedoch keine Isocyanatgruppen mehr enthält, wobei die in das Harz eingeführten Carboxylgruppen durch Zugabe einer Base zu 45 bis 100% in Carboxylatgruppen übergeführt werden.
DE-A 4326270 umfaßt Zweikomponenten-Polyurethanüberzugsmittel, insbesondere für die Herstellung von Mehrschichtlackierungen im Kraftfahrzeugsektor, die wäßrige Dispersionen wasserlöslicher oder wasserdispergierbarer Bindemittel enthalten, die gegenüber Isocyanat reaktive Gruppen aufweisen, nebst Polyisocyanaten als Vernetzungskomponente. Als geeignete Bindemittel werden beispielsweise alkydfreie anionische Polyester beschrieben, hergestellt aus Polyalkoholen und Polycarbonsäuren, die Hyroxylzahlen zwischen 10 und 200 mg KOH/g, Säurezahlen zwischen 10 und 100 mg KOH/g sowie zahlenmittlere Molekulargewichte Mn zwischen 1000 und 100000 Dalton aufweisen.
In DE-A 4328092 werden emulgatorfreie wäßrige Überzugsmittel beschrieben, die als Bindemittel eine Kombination aus (A) einem Gemisch aus einem oder mehreren wasserverdünnbaren Polyurethanharzen und/oder Alkydurethanharzen, welche ungesättigte Fettsäurereste als Substituenten enthalten können, mit einem oder mehreren wasserverdünnbaren (Meth)acrylatcopolymerisaten, Polyurethanharzen und/oder Polyesterharzen und (B)einem oder mehreren Aminoplastharzen und einem oder mehreren blockierten Polyisocyanaten enthält. Die beschriebenen Bindemittel weisen Säurezahlen zwischen 10 und 100 mg KOH/g, Hydroxylzahlen zwischen 10 und 150 mg KOH/g sowie zahlenmittlere Molekulargewichte zwischen 2000 und 10000 Dalton auf.

DE-A 4226243 beschreibt wasserverdünnbare Überzugsmittel enthaltend (A) filmbildende Polymerpolyole in der Form von wäßrigen Dispersionen von fettsäuremodifizierten Polyurethanharzen und/oder fettsäuremodifizierten Polyesterharzen (Alkydharzen) mit gesättigten und ungesättigten Fettsäureresten sowie (B) Polyisocyanate mit mehr als einer freien Isocyanatgruppe, gegebenenfalls unter Zusatz eines oder mehrerer organischer Lösungsmittel und der üblichen Lackadditive, wie Pigmente, Füllstoffe oder Rheologiehilfsmittel als Zweikonponenten-Beschichtungsmittel.

### Aufgabe und Lösung

Bei sogenannten "Do-it-yourself"-Malerlacken, die in der Hauptsache bei der Lackierung von Holz-, Kunststoff- oder Metallsubstraten eingesetzt werden, besteht das Bedürfnis nach lösemittelarmen Einkomponentensystemen, die eine schnelle Aushärtung des Lacks bei Raumtemperatur gewährleisten. Darüber hinaus sollen solche Malerlacke vergilbungsarm, witterungsstabil, kratzfest und hochglänzend sein sowie eine hohe Beständigkeit gegen Wasser aufweisen. Insbesondere die Beständigkeit gegen Vergilbung, welche im wesentlichen durch oxidative Prozesse induziert wird, sowie der geringe Anteil an Lösemitteln im Lack, der durch zunehmend restriktivere Umweltschutzauflagen gefordert wird, sind von herausragender Bedeutung für Malerlacke.

Überraschenderweise wurde gefunden, daß Lackbindemittel auf Alkydharzbasis mit einer spezifischen Kombination aus ungesättigten Fettsäuren, die jeweils mindestens zwei Doppelbindungen in der Kohlenstoffkette aufweisen, in der Alkydkomponente des Lackbindemittels gemeinsam mit einem reduzierten Lösemittelgehalt in der Bindemittelkomponente diese Aufgaben hervorragend lösen.

Die erfindungsgemäßen Einkomponenten-Lacke enthalten Bindemittel BM, bestehend im wesentlichen aus einer Polyurethan-Alkydharzkomponente (A), aufgebaut aus:
(a) 5 bis 50 Gew.-% eines Gemischs aus:
   (a1) 90 bis 30 Gew.-Teilen einer ungesättigten C6- bis C30-Fettsäure mit mindestens zwei nicht konjugierten Doppelbindungen, sowie
   (a2) 10 bis 70 Gew.-Teilen einer ungesättigten C6- bis C30-Fettsäure mit mindestens zwei konjugierten Doppelbindungen,
   als veresterte Polymerseitenketten der Polyurethan-Alkydharzkomponente (A), sowie
(b) 95 bis 50 Gew-% Polyurethaneinheiten als Polymerhauptketten der Polyurethan-Alkydharzkomponente (A).

Vorzugsweise besteht das Gemisch (a) aus 80 bis 50 Gew.-Teilen (a1) und entsprechend 20 bis 50 Gew.-Teilen (a2), besonders vorzugsweise aus 80 bis 60 Gew.-Teilen (a1) und entsprechend 20 bis 40 Gew.-Teilen (a2). In einer besonders bevorzugten Ausführungsform der Erfindung wird als Komponente (a1) Linolsäure und als Komponente (a2) C18-Konjuen-Fettsäure eingesetzt. Für die Synthese der Polyurethaneinheiten (b) werden vorzugsweise Polyesterpolyole (b1) eingesetzt, die als Alkoholbausteine (b11) bevorzugt aliphatische, cycloaliphatische und /oder araliphatische Alkohole mit 1-6 an nicht-aromatische Kohlenstoffatome gebundenen Hydroxylgruppen pro Molekül und die als Säurebausteine (b12) bevorzugt aliphatische, cycloaliphatische gesättigte oder ungesättigte und/oder aromatische mehrbasische Carbonsäuren, vorzusweise Di-, Tri- und Tetracarbonsäuren oder deren Anhydride oder Ester enthalten.Vorzugsweise besitzen die Polyesterpolyole Säurezahlen zwischen 1 und 10 mg KOH/g, besonders vorzugsweise zwischen 2 und 5 mg KOH/g, sowie vorzugsweise Hydroxylzahlen zwischen 100 und 250 mg KOH/g, besonders vorzugsweise zwischen 140 und 160 mg KOH/g.
Bevorzugte Polyisocyanate (b2) für die Einführung der Urethangruppen in die Polyesterhauptkette weisen 4 bis 25 Kohlenstoffatome und 2 bis 4 Isocyanatgruppen pro Molekül auf.
Die Polyurethan-Alkydharzkomponenten (A) weisen bevorzugt Säurezahlen zwischen 15 und 40 mg KOH/g, besonders bevorzugt zwischen 20 und 30 mg KOH/g, sowie bevorzugt Hydroxylzahlen zwischen 90 und 150 mg KOH/g, besonders bevorzugt zwischen 100 und 130 mg KOH/g auf. Der Gehalt an Urethangruppen in den Polyurethan-Alkydharzkomponenten (A) liegt vorzugsweise zwischen 5 und 15 Gew.-% bezogen auf (A), besonders vorzugsweise zwischen 5 und 10 Gew.-%.

Bevorzugt enthalten die wäßrigen Bindemitteldispersionen BM weniger als 2 Gew.-% an Lösemitteln, besonders bevorzugt weniger als 1 Gew.-% bezogen auf die Bindemitteldispersion BM.

Weiterhin können die wäßrigen Bindemitteldispersionen BM zwischen 0 und 20 Gew.-%, vorzugsweise zwischen 0 und 10 Gew.-%, bezogen auf (A) zusätzliche Vernetzerkomponenten (B) enthalten, die vorzugsweise bei Raumtemperatur mit den überschüssigen Hydroxyl- und/oder Carboxylgruppen der Polyurethan-Alkydharzkomponente (A) reagieren können.

### Durchführung der Erfindung

### Die Komponenten der Polyurethan-Alkydharz-Komponente (A)

Das die Polymerseitenketten aufbauende Gemisch (a) aus ungesättigten Fettsäuren (a1) mit mindestens zwei nicht-konjugierten Doppelbindungen und ungesättigten Fettsäuren (a2) mit mindestens zwei konjugierten Doppelbindungen ist in Anteilen von 5 bis 50 Gew.-% bezogen auf die Polyurethan-Alkydharz-Komponente (A) , berechnet als Triglycerid (Öllänge), vorzugsweise in Anteilen von 10 bis 45 Gew.-% anwesend.
Die Komponenten (a1) und (a2) werden im allgemeinen als trocknende Fettsäuren bezeichnet und weisen vorzugsweise zwischen 6 und 30, besonders bevorzugt zwischen 8 und 24 Kohlenstoffatome pro Molekül auf.
Beispielhaft für die ungesättigten Fettsäuren (a1) mit mindestens zwei nicht-konjugierten Doppelbindungen seien genannt:Linolensäure sowie bevorzugt Linolsäure als C18-Fettsäuren.
Beispielhaft für die ungesättigten Fettsäuren (a2) mit mindestens zwei konjugierten Doppelbindungen, auch Konjuenfettsäuren genannt, sei vorzugsweise die konjugierte Linolsäure mit zwei in Konjugation stehenden Doppelbindungen am 9. und am 11.Kohlenstoffatom der C17-Alkylkette der C18-Fettsäure genannt.
Die Fettsäuren (a1) und (a2) sind beispielsweise in natürlichen Ölen wie Leinöl, Sojaöl, Saffloröl, Baumwollsaatöl oder Ricinusöl, Sonnenblumenöl, Erdnußöl, Holzöl und Ricinenöl enthalten. Die daraus gewonnenen Fettsäuren sind Leinölfettsäure, Safflorölfettsäure, Tallölfettsäure, Baumwollsaatfettsäure, Erdnußölfettsäure, Holzölfettsäure, Ricinenfettsäure oder bevorzugt Sonnenblumenölfettsäure.

Die die Polymerhauptkette aufbauenden Polyurethaneinheiten (b)sind aus Polyesterpolyolen (b1) und Polyisocyanaten (b2) solchermaßen aufgebaut, daß der Gehalt an Urethangruppen in den Polyurethan-Alkydharzen vorzugsweise zwischen 5 und 15 Gew-% bezogen auf (A), besonders vorzugsweise zwischen 5 und 10 Gew.-% bezogen auf (A) liegt. Die Säurezahlen der Polyesterpolyole (b1) liegt vorzugsweise zwischen 1 und 10 mg KOH/g, besonders vorzugsweise zwischen 2 und 5 mg KOH/g, während die Hydroxylzahl der Polyesterpolyole (b1) vorzugsweise zwischen 100 und 250 mg KOH/g, besonders vorzugsweise zwischen 140 und 160 mg KOH/g liegt. Die zahlenmittleren Molekulargewichte Mn der Polyesterpolyole liegen zwischen 800 und 2.000 Dalton, vorzugsweise zwischen 1.000 und 1.500 Dalton.
Die Polyesterpolyole (b1) sind aus Alkoholbausteinen (b11) und Säurebausteinen (b12) aufgebaut.
Vorzugsweise werden als Alkoholbausteine (b11) aliphatische, cycloaliphatische und/oder araliphatische Alkohole mit 1 bis 6, vorzugsweise 1 bis 4 an nicht-aromatische Kohlenstoffatome gebundene Hydroxylgruppen verwendet. Beispielhaft für (b12) seien genannt:
Ethylenglykol, Propandiol-1,2 und -1,3, Butandiol-1,2, -1,3 und 1,4, 2-Ethylpropandiol-1,3, 2-Methylpropandiol, 2-Butyl-2-ethylpropandiol, 2-Ethylhexandiol-1,3, 1,3-Neopentylglykol, 2,2-Dimethylpentandiol-1,3, Hexandiol-1,6, Cyclohexandiol-1,2 und -1,4, 1,2- und 1,4-Bis(hydroxymethyl)cyclohexan, Bis(4-Hydroxycyclohexyl)methan, Adipinsäure-bis-(ethylenglykolester), Etheralkohole wie Di- und Triethylenglykol, Dipropylenglykol, perhydrierte Bisphenole, Butantriol-1,2,4, Hexantriol-1,2,6, Trimethylolethan, Trimethylolpropan, Trimethylolhexan, Glycerin, Pentaerythrit, Dipentaerythrit, Mannit und Sorbit, sowie kettenabbrechende Monoalkohole mit 1 bis 8 Kohlenstoffatomen wie Propanol, Butanol, Cyclohexanol, Benzylalkohol und Hydroxypivalinsäure. Bevorzugt eingesetzte Alkohole sind: Glycerin, Trimethylolpropan, Neopentylglykol und Pentaerythrit.
Um wasserdispergierbare Polyurethan-Alkydharzkomponenten (A) (A) zu erhalten, werden als Monomerbausteine (b11) zumindest teilweise Polyole mit anionischen Gruppen oder in anionische Gruppen überführbare Gruppen, wie beispielsweise Carboxylgruppen eingesetzt. Bevorzugt werden hierfür Alkansäuren mit ein bis zwei Hydroxylsubstituenten eingesezt. Diese Polyole haben im allgemeinen 1 bis 3, vorzugsweise eine Carboxylgruppe im Molekül, sowie vorzugsweise 3 bis 15 Kohlenstoffatomen pro Molekül. Beispiele für solche verbindungen sind: Hydroxypivalinsäure, Dihydroxypropionsäure, Dihydroxybernsteinsäure, Dihydroxybenzoesäure und/oder Dihydroxycyclohexan-Monocarbonsäure. Besonders bevorzugt sind als Monomerbaustein die 2,2-Dimethylolalkansäuren mit Alkylresten von bis zu 20 Kohlenstoffatomen, wie beispielsweise 2,2-Dimethylolessigsäure, 2,2-Dimetylolpentansäure oder ganz besonders bevorzugt 2,2-Dimethylolpropionsäure. Der Anteil der carboxylgruppenhaltigen Monomeren an der Gesamtheit der Polyolbausteine (b11) wird solchermaßen gewählt, daß die Säurezahl der Polyurethan-Alkydharz-Komponente (A) vorzugsweise zwischen 15 und 40 mg KOH/g, besonders bevorzugt zwischen 20 und 30 mg KOH/g liegt.

Als Säurebausteine (b12) werden vorzugsweise aliphatische, cycloaliphatische gesättigte oder ungesättigte und/oder aromatische mehrbasische Carbonsäuren, besonders vorzugsweise Di-, Tri- und Tetracarbonsäure, sowie deren Anhydride und/oder deren Ester eingesetzt. Beispielhaft seien genannt: Phthalsäure(anhydrid), Isophthalsäure, Terephthalsäure, Tetrahydro- oder Hexahydrophthalsäure(anhydrid), Endomethylentetrahydrophthalsäure, Bernsteinsäure, Glutarsäure, Sebacinsäure, Azelainsäure, Trimellithsäure, Trimellithsäureanhydrid, Pyromellithsäure(anhydrid), Fumar- und Maleinsäure. Am gebräuchlichsten sind Isophthalsäure und Phthalsäure(anhydrid).

Als Polyisocyanate (b2) bevorzugt sind solche, die 4 bis 25 Kohlenstoffatome und 2 bis 4 Isocyanatgruppen pro Molekül aufweisen.Besonders bevorzugt sind aliphatische, cycloaliphatische, araliphatische oder aromatische Diisocyanate, wie beispielsweise: 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat (Isophorondiisocyanat),2,5- und 3,5-Bis(isocyanatomethyl)-8-methyl-1,4,-methano-decahydronaphthalin, 2,6-Bis-(isocyanato)-4,7-methano-hexahydroindan, Dicyclohexyl-2,4'- und -4,4'-diisocyanat, 2,4-und 2,6-Hexahydrotoluylendiisocyanat, Perhydro-2,4'- und -4,4'-dipheylmethandiisocyanat, 1,3- und 1,4-Phenylendiisocyanat, 4,4'-Diisocyanatodiphenyl, 4,4'-Diisocyanato-3,3'-dimethoxydiphenyl, 4,4'-Diisocyanato-3,3'-dimethyldiphenyl, 4,4'-Diisocyanato-3,3'-Dipenyldiphenyl, 2,4'- und 4,4'-Disocyanatodiphenylmethan, Naphthylen-1,5-diisocyanat, Toluylendiisocyanat, wie 2,4- bzw. 2,6-Toluylendiisocyanat, N,N'-(4,4'-Dimethyl-3,3'-diisocyanato-diphenyl)uretdion, m-Xylylen-diisocyanat, Tetramethyl-xylylendiisocyanat oder Triisocyanate, wie 2,4,4'-Triisocyanatodiphenylether, 4,4',4"-Triisocyanato-triphenylmethan, Tris(4-isocyanatophenyl)-thiophosphat.Besonders bevorzugt werden im allgemeinen die technisch leicht zugänglichen aliphatischen oder cycloaliphatischen Polyisocyanate, wie insbesondere Hexamethylendiisocyanat, 4,4'-Di(isocyanatocyclohexyl)methan und Isophorondiisocyanat sowie das araliphatische Tetramethylxylylendiisocyanat.

### Die Herstellung der Polyurethan-Alkydharzkomponente (A)

Bevorzugt werden die Polyurethan-Alkydharze (A) in einem zwei- oder mehrstufigen Verfahren hergestellt, das zunächst die Synthese der Polyesterpolyol-Komponente (b1), enthaltend die ungesättigten Fettsäuren (a1) und (a2) als Monomerbausteine umfaßt, wobei hernach (b1) in einem weiteren Verfahrensschritt mit dem Polyisocyanat (b2) zur Polyurethan-Alkydharz-Komponente umgesetzt wird.
Die Herstellung der Komponente (b1), die auch als hydroxyfunktionelles Alkydharz bezeichnet werden kann, wird in Gegenwart von 0,01 bis 2,5 Gew.-%, bezogen auf die Alkydharz-Komponente (b1), an Katalysatoren, wie vorzugsweise Dialkyl- oder Dialkoxyzinnoxiden, unter azeotroper Abdestillation des Reaktionswassers solchermaßen durchgeführt, daß das Alkydharz (b1) eine Säurezahl von bevorzugt weniger als 10 mg KOH/g, besonders bevorzugt von weniger als 5 mg KOH/g aufweist.
Die solchermaßen hergestellte Komponente (b1) wird in einem weiteren Verfahrensschritt mit dem Polyisocyanat (b2) in solchen Gewichtsverhältnissen umgesetzt, daß das resultierende Polyurethan-Alkydharz (A) einen Gehalt an Urethangruppen von vorzugsweise zwischen 5 und 15 Gew.-% bezogen auf (A), besonders vorzugsweise zwischen 5 und 10 Gew.-%, aufweist.Die Umsetzung wird vorzugsweise solange durchgeführt bis kein freies Isocyanat mehr nachweisbar ist. Die Säurezahl des Polyurethan-Alkydharzes (A) beträgt vorzugsweise zwischen 15 und 40 mg KOH/g, besonders vorzugsweise zwischen 20 und 30 mg KOH/g, während die Hydroxylgruppenzahl vorzugsweise zwischen 90 und 150 mg KOH/g, besonders vorzugsweise zwischen 100 und 130 mg KOH/g liegt.
Bevorzugt werden die Polyisocyanate (b2) in einem vorgeschalteten Reaktionsschritt mit Hydroxycarbonsäuren, wie sie beispielsweise in der oben angeführten Aufzählung der für die Syntese des hydroxyfunktionellen Alkydharzes (b1) enthalten sind, umgesetzt. Dies dient vorzugsweise der Steuerung der Säurezahl im Polyurethan-Alkydharz (A).

Die zahlenmittleren Molekulargewichte Mn (bestimmt per Gelpermeationschromatographie) der Polyurethan-Alkydharze (A) liegt im allgemeinen zwischen 1000 und 100000, bevorzugt zwischen 2000 und 50000, besonders bevorzugt zwischen 2000 und 20000 Dalton.

Anschließend wird die Lösung des Polyurethan-Alkydharzes (A) vorzugsweise mit einer bevorzugt organischen Base, beispielsweise Ammoniak oder organische Amine, wie Triethylamin, N-Methylmorpholin oder Aminoalkohole, wie Dimethylisopropanolamin, 2-Amino-2-methylpropanol-1 oder vorzugsweise Dimethylethanolamin, neutralisiert. Grundsätzlich kann die Herstellung des erfindungsgemäßen Polyurethan-Alkydharzes in Masse oder in Lösung durchgeführt werden.
Die für die Herstellung des Polyurethan-Alkydharzes (A) verwendeten Lösemittel sind bevorzugt gegen Ioscyanat inert und wasserverdünnbar, wie beispielsweise Ketone, Ester oder Ether, wie z.B. Aceton, N-Methylpyrrolidon, Dipropylenglykoldimethylether, Ethylethoxypropionat oder besonders bevorzugt Methylethylketon.
Gegebenenfalls können auch gegen Isocyanat nicht inerte aber wasserverdünnbare Lösemittel eingesetzt werden, wie beispielsweise monofunktionelle Alkohole, wie z.B. Butanol, n-Propanol, Isopropanol; Etheralkohole, wie z.B. Butoxyethanol, Methoxypropanol, Ethoxypropanol, Butoxypropanol; Dialkohole, wie z.B. Ethylenglykol; Trialkohole, wie z.B. Glycerin.
Bei der Verwendung von Alkoholen als Lösemittel ist zu beachten, daß diese als Reaktionspartner bei der Herstellung der Komponenten (b1) und bei der anschließenden Umsetzung von (b1) mit (b2) zu (A) auftreten können.
Ebenso können gegen Isocyanat inerte und nicht oder nur wenig wasserverdünnbare Lösemittel, wie Ether, Ester Ether-Ester oder Ketone eingesetzt werden.

### Die Lackformulierungen

Bis zu einem Anteil von 25 Gew.-%, bevorzugt bis 15 Gew.-% kann das Bindemittel BM neben der Polyurethan-Alkydharzkomponente (A) von (A) verschiedene Harze beinhalten, wie beispielsweise (Meth)acrylcopolymere, Polyesterharze und/oder von (A) verschiedene Polyurethanharze.
Die Bindemittel BM sind wäßrige Dispersionen und enthalten weniger als 5 Gew.-%, vorzusweise weniger als 2 Gew.-% und besonders vorzugsweise weniger als 1 Gew.-% Lösemittel.Der Anteil der Komponente (A) im Bindemittel BM beträgt zwischen 20 und 75 Gew.-%, vorzugsweise zwischen 25 und 65 Gew.-%, besonders vorzugsweise zwischen 30 und 60 Gew.-%.
Neben den Harzkomponenten enthält der erfindungsgemäße Einkomponentenlack mindestens ein anorganisches und/oder organisches Farb- oder Effektpigment und gegebenfalls zusätzlich einen Füllstoff.
Beispiele für farbgebende Pigmente oder Füllstoffe sind: Titandioxid, Eisenoxidpigmente, Ruße, Siliciumdioxid, Aluminiumsilikat, Korrosionsschutzpigmente, wie Blei- und Chromatverbindungen, Bariumsulfat, Glimmer, Talkum, Kaolin, Kreide, Azofarbstoff-Pigmente, Phthalocyaninfarbstoff-Pigmente oder Ultramarinblau.

Beispiele für Effektpigmente sind: Metallpigmente, beispielsweise aus Aluminium, Kupfer oder anderen Metallen, Interferenzpigmente, wie beispielsweise metalloxidbeschichtete Metallpigmente, beschichtete Glimmer, wie beispielsweise titanoxidbeschichteter Glimmer, und Graphiteffektpigmente.
Die Pigmente werden im allgemeinen im Form einer Paste eingesetzt, die beispielsweise handelsüblich ist oder die vorzugsweise durch Kombination von einem Teil des Bindemittelharzes, Wasser, Netzmittel und Pigment, gegebenenfalls gemeinsam mit einem Füllstoff, formuliert wird und in einem dem Fachmann geläufigen Aggregat, beispielsweise einer Perlmühle, angerieben und auf eine bestimmte Pigmentteilchengröße, vorzugsweise zwischen 10 und 15 Mikrometer eingestellt wird. Dabei muß beachtet werden, daß während des Mahlprozesses die Stabilität der wäßrigen Dispersion erhalten bleibt. Gegebenenfalls können hierfür weitere Dispergierhilfsmittel zugesetzt werden.
Das Gewichtsverhältnis von Pigment zu Bindemittel liegt im allgemeinen zwischen 0,01:1 und 4:1, vorzugsweise zwischen 0,3:1 und 1:1.

Weiterhin enthält der Lack im allgemeinen rheologiesteuernde Mittel, wie beispielsweise Polymermikroteilchen, anorganische Schichtsilikate, z.B. Aluminium-Magnesium-Schichtsilikate, Natrium-Magnesium-Schichtsilikate und Natrium-Magnesium-Fluorlithium-Schichtsilikate des Montmorillonittyps, sowie Assoziativverdicker, wie z.B. auf Polyurethan- oder Cellulosebasis, Polyvinylalkohol, Poly(meth)acrylamid oder Polymere mit ionischen Gruppen, wie z.B. Poly(meth)acrylsäure.

In untergeordneten Anteilen von bis zu 20 Gew.-%, vorzugsweise von bis zu 10 Gew.-% bezogen auf das Bindemittel (A) können die erfindungsgemäßen Lackformulierungen Komponenten (B) enthalten, die die Bindemittel bei den Applikationstemperaturen chemisch, das heißt unter Ausbildung kovalenter Bindungen, vernetzen. Vorzugsweise reagieren die Komponenten (B) mit den freien Hydroxylgruppen des Polyurethan-Alkydharzes (A) unter Ausbildungen eines dreidimensionalen Netzwerks. Beispiele für solche Vernetzungskomponenten (B) sind: Polyisocyanate, wie sie als Komponente (b2) des Polyurethan-Alkydharzes (A) angeführt sind, oder Polyepoxide.

Die erfindungsgemäßen Lackformulierungen werden mittels der an sich üblichen Techniken, wie beispielsweise Tauchen, Rakeln, Rollen oder Spritzen auf die zu beschichtenden Substrate aufgetragen, wobei der sich bildende Film vernetzt. Die Vernetzung erfolgt bei Temperaturen zwischen 0 und 100 Grad C, vorzugsweise zwischen 10 und 60 Grad C, besonders vorzusweise zwischen 15 und 40 Grad C (Raumtemperaturverhältnisse). Die Schichtdicken der applizierten erfindungsgemäßen Lacke richten sich nach der Anwendung und nach der Lackformulierung. Beipielsweise weisen Klarlacküberzüge Schichtdicken zwischen 40 und 100
Mikrometer, pigmentierte Basis- oder Decklacküberzüge Schichtdicken zwischen 50 und 120 Mikrometer, Überzüge als Füller oder Schutz gegen mechanische Stoßbeanspruchung Schichtdicken zwischen 70 und 160 Mikrometer sowie Grundierungen Schichtdicken zwischen 50 und 110 Mikrometer auf.

Als Substrate für die erfindungsgemäßen Lackformulierungen sind beliebige Untergründe geeignet, beispielsweise Metallsubstrate, wie Eisen, Stähle, Aluminium oder Zink. Als geeignete nicht-metallische Substrate seien mineralische Substrate, wie beispielsweise Beton, Putze oder Glas, Holz oder Kunststoffe, wie beispielsweise Polyolefine, Polyurethane, Polystyrol, Polycarbonat, Poly(meth)acrylate oder Polyvinylchlorid genannt. Gegebenenfalls können die Substrate Vorbeschichtungen aufweisen.
Die erfindungsgemäßen Lackformulierungen können für sich alleine oder gemeinsam mit anderen Beschichtungsmittel in einer oder mehreren Stufen aufgetragen werden. Bei der Lackapplikation kann auf getrocknetes beschichtetes oder auf ein feuchtes beschichtetes Substrat aufgetragen werden, wobei bei letzterer Technik eine kureze Ablüftphase zwischengeschaltet werden kann. Bei dem mehrstufigen Beschichtungsverfahren kann der erfindungsgemäße Lack für sich alleine in mehreren Stufen aufgetragen werden, wobei das in der Vorstufe hergestellte beschichtete Substrat trocken oder feucht sein kann.

Die folgenden Beispiele sollen die Erfindung weiter veranschaulichen.

### Beispiele

### Beispiel 1: Herstellung der Polyol-Alkydharzkomponente (b1) aus den Monomerbausteinen (a1), (a2), (b11) und (b12):

80 g Neopentylglykol, 647 g Trimethylolpropan, 331 g Isophthalsäure, 308 g Hexahydrophthalsäureanhydrid, 792 g einer Mischung aus handelsüblicher Linolsäure und C18-Fettsäure mit konjugierten Doppelbindungen, wobei die Linolsäure einen Anteil von 75 Gew.-% und die C18-Fettsäure mit konjugierten Doppelbindungen den zu 100 Gew.-% ergänzenden Anteil in der Mischung ausmachen, werden in einem Reaktor in Gegenwart von 0,48 g Dibutylzinnoxid als Katalysator sowie 40 g Xylol als Schleppmittel so lange unter azeotroper Abdestillation des Reaktionsprodukts Wasser erhitzt, bis eine Säurezahl von 4 mg KOH/g erreicht ist. Nach dem Abkühlen wird in 212 g Methylethylketon gelöst.

### Beispiel 2: Herstellung der wäßrigen Bindemittel-Dispersion BM, enthaltend das Polyurethan-Alkydharz (A), aus der Polyolalkydharz-Komponente (b1) gemäß Beispiel 1

303 g Tetramethylxylylendiisocyanat und 83 g Dimethylolpropionsäure werden in einem geeigneten Reaktionsgefäß in 809 g Methylethylketon so lange auf 80 bis 82 Grad C erhitzt, bis der NCO-Gehalt des Präaddukts 4,4% beträgt. Danach wird auf 50 Grad C abgekühlt,mit 1285 g der gemäß Beispiel 1 hergestellten Polyolalkydharz-Komponente (b1) versetzt und bei 80 Grad C so lange umgesetzt, bis kein freies Isocyanat mehr nachweisbar ist. Hiernach werden zur Neutralisation 44 g Dimethylaminoethanol zugesetzt und das gebildete Polyurethan-Alkydharz (A) in 1050 g deionisiertem Wasser dispergiert. Anschließend wird das Methylethylketon bis auf einen Restanteil von 0.78 Gew.-%, bezogen auf das Endprodukt, durch azeotrope Destillation entfernt und die Dispersion mit deionisiertem Wasser auf einen Gehalt an Polyurethan-Alkydharz (A) von 40 Gew.-% eingestellt.

### Beispiel 3: Herstellung einer Pigment-Weißpaste

18 g der Bindemitteldispersion BM gemäß Beispiel 2 werden nach Zugabe 6 g deionisiertem Wasser und 8,9 g eines handelsüblichen Dispergiermittels auf Basis anionischer und nichtionischer Bestandteile (Disperse Ayd W22 R der Firma Krahn Chemie GmbH) mit 60 g Titandioxid-Pigment(Rutil-Typ R-HD2 R der Firma Tioxide) vermischt. Diese Mischung wird mit deionisiertem Wasser auf einen Feststoffgehalt von 70 % eingestellt und in einer Perlmühle auf einen Pigmentteilchen-Durchmesser von 10 bis 15 Mikrometer ausdispergiert.

### Beispiel 4: Herstellung einer Pigment-Blaupaste

15 g der Bindemitteldispersion BM gemäß Beispiel 2 werden mit 21 g deionisiertem Wasser, 13 g des o.g. Netzmittel, 5 g Propylenglykol und 38 g eines handelsüblichen Blaupigments (Colorindex PB 15 R) vermischt. Diese Mischung wird mit deionisiertem Wasser auf einen Feststoffgehalt von 54% eingestellt und in einer Perlmühle auf einen Pigmentteilchen-Durchmesser von 15 bis 20 Mikrometer ausdispergiert.

### Beispiel 5: Herstellung eines weißen wasserverdünnbaren Hochglanzlacks

In 64 g der Bindemitteldispersion BM gemäß Beispiel 2 werden 1,8 g Sikkativmischung, bestehend aus Strontiumoctoat, Cobaltoctoat und Calciumoctoat (50 Gew.-% Feststoffgehalt, Siccatol R 938 der Firma AKZO), dispergiert. Danach werden 21 g der Pigment-Weißpaste gemäß Beispiel 3, 4 g Butylglykol, 0,5 g eines handelsüblichen Verdickers (Polyurethan-Basis, 25 Gew.-% Festkörperanteil, Rheolate R 278 der Firma Kronos Titan GmbH) sowie 0,3 g eines handelsüblichen Entschäumers (Polysiloxan-Basis, Byk R 024 der Firma Byk Chemie) unter Rühren zugegeben. Hiernach werden 5 g einer nichtionischen Wachsemulsion (Aquacer R 535 der Firma Byk-Cera Chemie B.V.)und eine aufgeschlossene Mischung aus 0,3 g eines rheologischen Additivs (Bentone R LT der Firma Kronos Titan GmbH) und 3,3 g deionsiertem Wasser unter Rühren zugegeben. Mit deionisiertem Wasser wird anschließend eine Applikationsviskosität von 950 bis 1050 mPas eingestellt.

### Beispiel 6: Herstellung eines blauen wasserverdünnbaren Hochglanzlacks

In 63 g der Bindemitteldispersion gemäß Beispiel 2 werden 2,1 g eines Sikkativgemischs, bestehend aus Cobaltoctoat, Manganoctoat und Zirkonoctoat (Feststoffgehalt 44 Gew.-%, Additol R VXW 4952 der Firma Hoechst AG) dispergiert. Danach werden 12 g der Blaupaste gemäß Beispiel 4 und 6 g der Weißpaste gemäß Beispiel 3 unter Rühren zugegeben. Analog zu Beispiel 5 werden hiernach 4 g Butylglykol, 0,5 g Verdicker und 0,3 g eines handelsüblichen Entschäumers (Agitan R 703 N der Firma Münzing Chemie GmbH) unter Rühren zugegeben. Anschließend werden analog zu Beispiel 5 5 g einer nichtionischen Wachsemulsion zugestezt und danach mit deionisiertem Wasser die Applikationsviskosität von 950 bis 1050 mPas eingestellt.

## Patentansprüche

1. Einkomponenten-Lacksystem, welches bei Temperaturen zwischen 10 und 60 Grad C gehärtet wird, enthaltend eine wäßrige Dispersion mit Bindemitteln BM, welche eine Polyurethan-Alkydharzkomponente (A) enthalten, dadurch gekennzeichnet, daß (A) aufgebaut ist aus:
(a) 5 bis 50 Gew.-% eines Gemischs aus:
(a1) 90 bis 30 Gew.-Teilen einer ungesättigten C6- bis C30-Fettsäure mit mindestens zwei nicht-konjugierten Doppelbindungen, sowie
(a2) 10 bis 70 Gew.-Teilen einer ungesättigten C6- bis C30-Fettsäure mit mindestens zwei konjugierten Doppelbindungen als veresterte Polymerseitenketten der Polyurethan-Alkydharzkomponente (A) und
(b) 95 bis 50 Gew.-% Polyurethaneinheiten als Polymerhauptketten der Polyurethan-Alkydharzkomponente (A).

2. Einkomponenten-Lacksystem gemäß Anspruch 1, dadurch gekennzeichnet, daß (a) aufgebaut ist aus 80 bis 50 Gew.-% (a1) und 20 bis 50 Gew.-% (a2).

3. Einkomponenten-Lacksystem gemäß den Ansprüchen 1 und 2, dadurch gekennzeichnet, daß als Komponente (a1) Linolsäure und als Komponente (a2) eine C18-Konjugierten-Fettsäure verwendet wird.

4. Einkomponenten-Lacksystem nach einem der Ansprüche 1 bis 3, dadurch gekennzeichnet, daß die Polyurethaneinheiten (b) aufgebaut sind aus:
(b1) Polyesterpolyolen und
(b2) Polyisocyanaten.

5. Einkomponenten-Lacksystem nach Anspruch 4, dadurch gekennzeichnet, daß die Polyesterpolyole (b1) aufgebaut sind aus:
(b11) aliphatischen, cycloaliphatischen und/oder araliphatischen Alkoholen mit 1 bis 6 an nicht-aromatische Kohlenstoffatome gebundene Hydroxylgruppen pro Molekül, sowie
(b12) aliphatischen, cycloaliphatischen gesättigten und/oder ungesättigten und/oder aromatischen mehrbasischen Carbonsäuren, deren Anhydride und/oder deren Ester.

6. Einkomponenten-Lacksystem nach einem der Ansprüche 4 und 5, dadurch gekennzeichnet, daß die Polyisocyanate (b2) 4 bis 25 Kohlenstoffatome und 2 bis 4 Isocyanatgruppen pro Molekül aufweisen.

7. Einkomponenten-Lacksystem nach einem der Ansprüche 1 bis 6, dadurch gekennzeichnet, daß die wäßrige Dispersion der Polyurethan-Alkydharzkomponente (A) einen Gehalt an organischen Lösemitteln von weniger als 2 Gew.-% bezogen auf (A) aufweist.

8. Einkomponenten-Lacksystem nach einem der Ansprüche 1 bis 6, dadurch gekennzeichnet, daß die wäßrige Dispersion der Polyurethan-Alkydharzkomponente (A) einen Gehalt an organischen Lösemitteln von weniger als 1 Gew.-% bezogen auf (A) aufweist.

9. Einkomponenten-Lacksystem nach einem der Ansprüche 1 bis 8, dadurch gekennzeichnet, daß die Polyurethan-Alkydharzkomonente (A) Säurezahlen zwischen 15 und 40 mg KOH/g und Hyroxylzahlen zwischen 90 und 150 mg KOH/g aufweist.

10. Einkomponenten-Lacksystem nach einem der Ansprüche 1 bis 9, dadurch gekennzeichnet, daß die Polyurethan-Alkydharzkomponente (A) einen Gehalt an Urethangruppen zwischen 5 und 15 Gew.-% bezogen auf (A) aufweist.

11. Einkomponenten-Lacksystem nach einem der Ansprüche 1 bis 10, dadurch gekennzeichnet, daß zusätzlich zur Polyurethan-Alkydharzkomponente (A) bis zu 25 Gew.-%, bezogen auf (A), von (A) verschiedene Harze im Bindemittel BM anwesend sind.

12. Einkomponenten-Lacksystem nach einem der Ansprüche 1 bis 11, dadurch gekennzeichnet, daß zusätzlich zur Polyurethan-Alkydharzkomponente (A) bis zu 20 Gew.-%, bezogen auf (A), einer Vernetzerkomponente (B), im Bindemittel anwesend ist, welche bei Temperaturen unter 60 Grad C mit den überschüssigen Hydroxyl- und/oder Carboxygruppen der Polyurethan-Alkydharzkomponente reagieren kann.

13. Verwendung des Einkomponenten-Lacksystems nach einem der Ansprüch 1 bis 12 zur Beschichtung von mineralischen, Metall-, Holz- und Kunststoffsubstraten.

14. Verwendung des Einkomponenten-Lacksystems nach einem der Ansprüche 1 bis 12 zur Beschichtung von bereits beschichteten Substraten.

## Claims

1. One-component coating system, which is cured at temperatures between 10 and 60 degrees C, comprising an aqueous dispersion with binders BM, which contain a polyurethane alkyd resin component (A), characterized in that (A) is composed of:
(a) from 5 to 50% by weight of a mixture of:
(a1) from 90 to 30 parts by weight of an unsaturated C6 to C30 fatty acid containing at least two nonconjugated double bonds, and
(a2) from 10 to 70 parts by weight of an unsaturated C6 to C30 fatty acid containing at least two conjugated double bonds as esterified polymer side chains of the polyurethane alkyd resin component (A) and
(b) from 95 to 50% by weight of polyurethane units as polymer main chains of the polyurethane alkyd resin component (A).

2. One-component coating system according to claim 1, characterized in that (a) is composed of from 80 to 50% by weight of (a1) and from 20 to 50% by weight of (a2).

3. One-component coating system according to claims 1 and 2, characterized in that linoleic acid is employed as component (a1) and a C18 conjugated fatty acid as component (a2).

4. One-component coating system according to one of claims 1 to 3, characterized in that the polyurethane units (b) are composed of:
(b1) polyesterpolyols and
(b2) polyisocyanates.

5. One-component coating system according to claim 4, characterized in that the polyesterpolyols (b1) are composed of:
(b11) aliphatic, cycloaliphatic and/or araliphatic alcohols having per molecule 1 to 6 hydroxyl groups attached to nonaromatic carbon atoms, and
(b12) aliphatic, cycloaliphatic saturated and/or unsaturated and/or aromatic polybasic carboxylic acids, their anhydrides and/or their esters.

6. One-component coating system according to one of claims 4 and 5, characterized in that the polyisocyanates (b2) have 4 to 25 carbon atoms and 2 to 4 isocyanate groups per molecule.

7. One-component coating system according to one of claims 1 to 6, characterized in that the aqueous dispersion of the polyurethane alkyd resin component (A) has a content of organic solvents of less than 2% by weight based on (A).

8. One-component coating system according to one of claims 1 to 6, characterized in that the aqueous dispersion of the polyurethane alkyd resin component (A) has a content of organic solvents of less than 1% by weight based on (A).

9. One-component coating system according to one of claims 1 to 8, characterized in that the polyurethane alkyd resin component (A) has acid numbers of between 15 and 40 mg of KOH/g and hyroxyl [sic] numbers of between 90 and 150 mg of KOH/g.

10. One-component coating system according to one of claims 1 to 9, characterized in that the polyurethane alkyd resin component (A) has a content of urethane groups of between 5 and 15% by weight based on (A).

11. One-component coating system according to one of claims 1 to 10, characterized in that in addition to the polyurethane alkyd resin component (A) up to 25% by weight, based on (A), of resins different from (A) are present in the binder BM

12. One-component coating system according to one of claims 1 to 11, characterized in that in addition to the polyurethane alkyd resin component (A) up to 20% by weight, based on (A), of a crosslinking component (B), is present in the binder, which is able to react at temperatures below 60 degrees C with the excess hydroxyl and/or carboxy groups of the polyurethane alkyd resin component.

13. Use of the one-component coating system according to one of claims 1 to 12 for coating mineral, metal, wood and plastic substrates

14. Use of the one-component coating system according to one of claims 1 to 12 for coating substrates which are already coated.

## Revendications

1. Système de revêtement monocomposant, durci à des températures comprises entre 10 et 60 degrés C et comprenant une dispersion aqueuse avec des liants BM contenant un composant résine alkyde-polyuréthane (A), caractérisé en ce que (A) est composé de :
(a) de 5 à 50% en poids d'un mélange de :
(a1) de 90 à 30 parties en poids d'un acide gras en C6 à C30 insaturé ayant au moins deux doubles liaisons non conjuguées et
(a2) de 10 à 70 parties en poids d'un acide gras en C6 à C30 insaturé ayant au moins deux doubles liaisons conjuguées, en tant que chaînes latérales polymères estérifiées du composant résine alkyde-polyuréthane (A)
et
(b) de 95 à 50% en poids de motifs polyuréthane en tant que chaînes principales polymères du composant résine alkyde-polyuréthane (A).

2. Système de revêtement monocomposant selon la revendication 1, caractérisé en ce que (a) est composé de 80 à 50% en poids de (a1) et de 20 à 50% en poids de (a2).

3. Système de revêtement selon les revendications 1 et 2, caractérisé en ce que l'on utilise l'acide linoléique en tant que composant (a1) et un acide gras en C18 à ène conjugué.

4. Système de revêtement monocomposant selon l'une quelconque des revendications 1 à 3, caractérisé en ce que les motifs polyuréthane (b) sont composés de :
(b1) des polyester-polyols et
(b2) des polyisocyanates.

5. Système de revêtement monocomposant selon la revendication 4, caractérisé en ce que les polyester-polyols (b1) sont composés de :
(b11)des alcools aliphatiques, cycloaliphatiques et/ou araliphatiques ayant de 1 à 6 groupes hydroxy liés à des atomes de carbone non aromatiques par molécule, et
(b12) des acides carboxyliques polybasiques aliphatiques, cycloaliphatiques saturés et/ou insaturés et/ou aromatiques, leurs anhydrides et/ou leurs esters.

6. Système de revêtement monocomposant selon l'une quelconque des revendications 4 et 5, caractérisé en ce que les polyisocyanates (b2) renferment de 4 à 25 atomes de carbone et de 2 à 4 groupes isocyanate par molécule.

7. Système de revêtement monocomposant selon l'une quelconque des revendications 1 à 6, caractérisé en ce que la dispersion aqueuse du composant résine alkyde-polyuréthane (A) présente une teneur en solvants organiques inférieure à 2% en poids, par rapport à (A).

8. Système de revêtement monocomposant selon l'une quelconque des revendications 1 à 6, caractérisé en ce que la dispersion aqueuse du composant résine alkyde-polyuréthane (A) présente une teneur en solvants organiques inférieure à 1% en poids, par rapport à (A).

9. Système de revêtement monocomposant selon l'une quelconque des revendications 1 à 8, caractérisé en ce que le composant résine alkyde-polyuréthane (A) présente des indices d'acide compris entre 15 et 40 mg KOH/g et des indices d'hydroxy compris entre 90 et 150 mg KOH/g.

10. Système de revêtement monocomposant selon l'une quelconque des revendications 1 à 9, caractérisé en ce que le composant résine alkyde-polyuréthane (A) présente une teneur en groupes uréthane comprise entre 5 et 15% en poids, par rapport à (A).

11. Système de revêtement monocomposant selon l'une quelconque des revendications 1 à 10, caractérisé en ce qu'en plus du composant résine alkyde-polyuréthane (A), jusqu'à 25% en poids, par rapport à (A), de résines différentes de (A) sont présents dans le liant BM.

12. Système de revêtement monocomposant selon l'une quelconque des revendications 1 à 11, caractérisé en ce qu'en plus du composant résine alkyde-polyuréthane (A), jusqu'à 20% en poids, par rapport à (A), d'un composant de réticulation (B) sont présents dans le liant, lequel peut réagir avec les groupes hydroxy et/ou carboxy en excès du composant résine alkyde-polyuréthane à des températures inférieures à 60 degrés C.

13. Utilisation du système de revêtement monocomposant selon l'une quelconque des revendications 1 à 12, pour le revêtement de substrats minéraux, métalliques, en bois et en plastique.

14. Utilisation du système de revêtement monocomposant selon l'une quelconque des revendications 1 à 12, pour le revêtement de substrats déjà revêtus.
